# EUROPÄISCHE PATENTANMELDUNG

(11) **EP 1 048 528 A2**
(43) Veröffentlichungstag der Anmeldung: **02.11.2000**
(21) Anmeldenummer: 00107984.7
(22) Anmeldetag: 18.04.2000
(51) Int. Cl.: B60R 13/00, C22F 1/00

(54) **Zierteil für den Innenraum von Fahrzeugen**

(30) Priorität: 20.04.1999 DE 29907044 U
(71) Anmelder: TRW Automotive Safety Systems GmbH & Co. KG, 63743 Aschaffenburg (DE)
(72) Erfinder: Derrick, John-Oliver, 97265 Hettstadt (DE)
(74) Vertreter: Sulzbach, Werner, Dipl.-Chem. Dr.

(57) **Zusammenfassung**

Die Erfindung betrifft ein Zierteil (2) zur Verwendung im Innenraum von Fahrzeugen, welches dadurch gekennzeichnet ist, daß das Zierteil (2) aus einem Werkstoff mit hoher Elastizität und hoher Zugfestigkeit hergestellt ist, der nach Wegfall einer äußeren Verformungskraft selbsttätig die ursprüngliche Form annimmt. Gegenstand der Erfindung ist ferner die Verwendung derartiger Werkstoffe zur Herstellung von Zierteilen für die Befestigung auf nachgiebig elastischen Oberflächen im Innenraum von Fahrzeugen.

## Beschreibung

Die Erfindung betrifft ein Zierteil zur Verwendung im Innenraum von Fahrzeugen.

Der Innenraum von Fahrzeugen ist zur Verminderung der Verletzungsgefahr bei Unfällen zumindest in den insoweit kritischen Oberflächenbereichen bei allen modernen Fahrzeugtypen mit einem weichelastischen Material verkleidet, dessen Oberfläche unter Berücksichtigung haptischer und optischer Aspekte ausgebildet ist. Vielfach besteht dabei der Wunsch, auf derartigen Oberflächen Zierteile anzubringen, beispielsweise in Form eines Firmenlogos, um die Oberflächen nach ästhetischen Gesichtspunkten zu gliedern oder um den Benutzer an den Kraftfahrzeughersteller zu erinnern. Je nach geometrischer Ausgestaltung der Zierteile können sich dabei Probleme ergeben, insbesondere, wenn es sich um langgestreckte Elemente mit geringen Querschnittsabmessungen handelt. Will man derartige Elemente verwenden, so sind die elastisch nachgiebigen Oberflächen eine denkbare schlechte Befestigungsunterlage, so daß schon das Anbringen der Elemente erhebliche Sorgfalt erfordert. Soweit die Bereiche, in denen derartige Elemente angebracht werden sollen, bei normaler Fahrzeugbenutzung oder beim Ein- und Aussteigen als Abstützfläche benutzt werden, besteht die Gefahr, daß die Verbindung zwischen den Zierteilen und der elastisch nachgiebigen Oberfläche überstrapaziert und mit der Zeit gelöst wird. Eine weitere Schwierigkeit ergibt sich daraus, daß die aufgebrachten Elemente im allgemeinen nicht das gleiche weichelastische Verhalten zeigen wie die Oberflächen und daß sie zerbrechen, weil sie den elastischen Verformungen des Auskleidungsmaterials nicht folgen können.

Die vorgenannten Nachteile könnte man noch als normalen Verschleiß hinnehmen und mit leicht nachrüstbaren Elementen mehr oder weniger gut kompensieren. Nicht tolerierbar sind hingegen die Gefahren, die durch auf elastisch nachgiebigen Oberflächen aufgebrachte Zierteile mit geringen Querschnittsabmessungen bei einem Unfall entstehen können. Die im Hinblick auf eine Verbesserung der passiven Sicherheit vorgenommene Auskleidung möglicher Aufprallflächen der Karosserie mit weichelastischen Materialien verliert ihre Wirkung, wenn von darauf angebrachten Zierelementen eine zusätzliche und unter Umständen erhebliche Verletzungsgefahr ausgeht.

Es besteht somit die Aufgabe, Zierteile zur Verwendung im Fahrzeuginnenraum bereitzustellen, die bei normalem Gebrauch uneingeschränkt den elastischen Verformungen des relativ weichen Auskleidungsmaterial folgen können und die in Unfallsituationen keine zusätzliche Verletzungsgefahr hervorrufen.

Erfindungsgemäß wird vorgeschlagen, zur Herstellung von Zierteilen oder Firmenlogos, die im Fahrzeuginnenraum auf elastisch nachgiebigen Oberflächen befestigt werden sollen, einen Werkstoff mit hoher Elastizität und hoher Zugfestigkeit zu verwenden, der nach Wegfall einer äußeren Verformungskraft selbsttätig die ursprüngliche Form annimmt. Werkstoffe, die nach verhältnismäßig großer Verformung ihre ursprüngliche Form wieder einnehmen, wenn die Verformungskräfte wegfallen, haben eine dem menschlichen Erinnerungsvermögen vergleichbare Fähigkeit und werden daher vielfach als Memory-Werkstoffe bezeichnet. Sie sind dem Fachmann geläufig und werden in vielfältiger Form angeboten, beispielsweise unter der Kennzeichnung "Nitinol" (Hersteller: Euroflex G. Rau, Pforzheim, Deutschland).

Das Zierteil weist bevorzugt eine metallisch glänzende Oberfläche auf. Besonders bevorzugt ist der Memory-Werkstoff einer Titan-Nickel-Legierung oder ein Kunststoff. Der Kunststoff kann in Form einer Kunststoffolie gebildet sein. Auf den Kunststoff kann in vorteilhafter Weise eine metallische Oberfläche durch galvanisches Abscheiden aufgebracht sein. Alternativ dazu kann die metallische Oberfläche durch Bedampfen erzeugt werden. Die Zugfestigkeit des Werkstoffs beträgt bevorzugt mindestens 1100 MPa bei einer Gesamtdehnung von mindestens 11%. Der Elastizitätsmodul bei 20°C beträgt vorzugsweise mindestens 70 GPa.

Zur Befestigung des Zierteils auf der elastisch nachgiebigen Oberfläche im Fahrzeuginnenraum kann ein Kleber verwendet werden. Ferner kann die Befestigung mittels angeformter Stifte, Nieten, Laschen oder Stege auf der Abdeckkappe eines Airbagmoduls erfolgen. Das Zierteil weist bevorzugt zumindest ein Element mit geringen Querschnittsabmessungen auf.

Die Verwendung von Memory-Werkstoffen für den geschilderten, erfindungsgemäßen Zweck hat den Vorteil, daß aufgebrachte Zierteile, insbesondere solche mit geringen Querschnittsabmessungen, ohne weiteres den elastischen Verformungen des Auskleidungsmaterials folgen können, ohne daß die Verbindung zur Oberfläche überstrapaziert wird und ohne daß die Elemente zerbrechen. Sie haben ein quasi gummihaftes Verhalten und nehmen nach Druckentlastung ihre ursprüngliche Form wieder ein. Bei einem unfallbedingten Aufprall zersplittern sie nicht sondern geben aufgrund ihrer hohen Elastizität in dem Umfang nach, wie auch das darunter befindliche weichelastische Auskleidungsmaterial.

Gegenstand der Erfindung ist daher auch die Verwendung von Memory-Werkstoffen, d.h. von Werkstoffen mit hoher Elastizität und hoher Zugfestigkeit, die nach Wegfall einer äußeren Verformungskraft selbsttätig die ursprüngliche Form einnehmen, zur Herstellung von Zierteilen für die Befestigung auf einer elastisch nachgiebigen Oberfläche im Fahrzeuginnenraum.

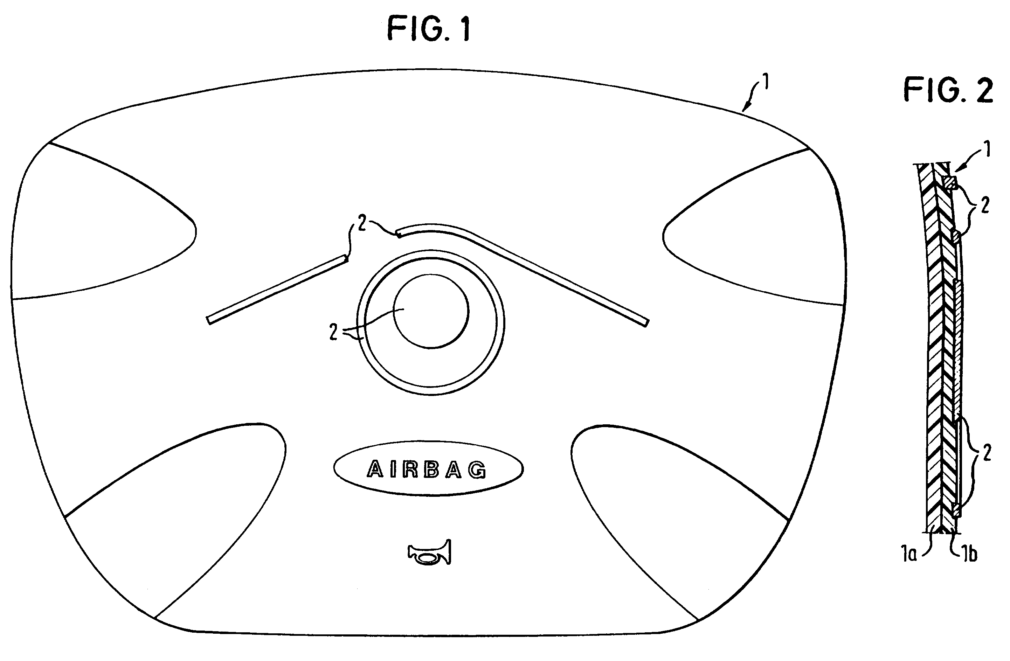

Weitere Einzelheiten werden anhand des in den Figuren 1 und 2 dargestellten Ausführungsbeispiels näher erläutert. Es zeigen:
Figur 1 eine Draufsicht auf die Abdeckkappe eines Airbagmoduls, das im Lenkrad eines Kraftfahrzeugs untergebracht ist; und
Figur 2 einen vergrößerten Teilschnitt durch den mittleren Bereich der Abdeckkappe gemäß Figur 1.

Auf der Abdeckkappe 1 ist außer dem üblichen, meist eingeprägten Hinweis "Airbag" und dem Horn im Betätigungsbereich für die Fahrzeughupe ein Firmenlogo 2 angeordnet, das hier aus einem kreisförmigen Plättchen, einem kreisringförmigen Element sowie zwei weiteren langgestreckten Elementen mit geringen Querschnittsabmessungen besteht. Die Form des Zierteils ist jedoch frei wählbar. Aus Figur 2 ist ersichtlich, daß die Abdeckkappe 1 eine untere Schicht 1a umfaßt, die hinsichtlich Wanddicke und Materialauswahl entsprechend den Festigkeitsanforderungen ausgelegt ist, sowie eine obere, dem Fahrzeuginnenraum zugewandte Schicht 1b, die aus einem weichelastischen Material besteht, auf dem das Firmenlogo 2 angebracht ist. Letzteres kann auf der äußeren Oberfläche angebracht sein, es kann aber auch - wie dargestellt - teilweise in die äußere Schicht 1b eingelassen sein, wenn dies gewünscht wird oder aus Gründen der besseren Befestigung erforderlich ist. Wenn das Firmenlogo 2 gemäß der Erfindung aus einem Werkstoff mit Memory-Effekt besteht, besteht auch für langgestreckte Elemente mit geringen Querschnittsabmessungen keine Bruchgefahr. Alle Elemente des Firmenlogos 2 können ohne weiteres den elastischen Verformungen der äußeren, weichelastischen Schicht 1b wie auch elastischen Verformungen der unteren Schicht 1a folgen, die bei normalem Gebrauch und bei einem unfallbedingten Aufprall auftreten können. Damit ist es möglich, auch auf Innenbereichen der Fahrzeugkarosserie, die mit weichelastischen Materialien beschichtet sind, Firmenlogos oder Zierteilen anzubringen, ohne daß mit einem vorzeitigem Verschleiß gerechnet werden muß und ohne daß in Unfallsituationen eine Verletzungsgefahr besteht.

## Patentansprüche

1. Zierteil (2) zur Verwendung im Innenraum von Fahrzeugen, dadurch gekennzeichnet, daß das Zierteil (2) aus einem Werkstoff mit hoher Elastizität und hoher Zugfestigkeit hergestellt ist, der nach Wegfall einer äußeren Verformungskraft selbsttätig die ursprüngliche Form annimmt.

2. Zierteil nach Anspruch 1, dadurch gekennzeichnet, daß das Zierteil (2) eine metallisch glänzende Oberfläche aufweist.

3. Zierteil nach Anspruch 1 oder 2, dadurch gekennzeichnet, daß der Werkstoff eine Titan-Nickel-Legierung ist.

4. Zierteil nach Anspruch 1 oder 2, dadurch gekennzeichnet, daß der Werkstoff ein Kunststoff ist.

5. Zierteil nach Anspruch 4, dadurch gekennzeichnet, daß der Kunststoff eine Kunststofffolie ist.

6. Zierteil nach Anspruch 4 oder 5, dadurch gekennzeichnet, daß der Werkstoff ein Kunststoff mit metallischer Oberfläche ist, die durch galvanisches Abscheiden aufgebracht ist.

7. Zierteil nach Anspruch 4 oder 5, dadurch gekennzeichnet, daß der Werkstoff ein Kunststoff mit metallischer Oberfläche ist, die durch Bedampfen aufgebracht ist.

8. Zierteil nach einem der Ansprüche 1 bis 7, dadurch gekennzeiehnet, daß das Zierteil mittels eines Klebers auf einer elastisch nachgiebigen Oberfläche (1) im Fahrzeuginnenraum befestigt ist.

9. Zierteil nach einem der Ansprüche 1 bis 8, dadurch gekennzeichnet, daß das Zierteil auf der Abdeckkappe (2) eines Airbagmoduls befestigt ist, wobei die Befestigung mittels angeformter Stifte, Nieten, Laschen oder Stege erfolgt.

10. Zierteil nach einem der vorhergehenden Ansprüche, dadurch gekennzeichnet, daß das Zierteil zumindest ein Element mit geringen Querschnittsabmessungen aufweist.

11. Zierteil nach einem der vorhergehenden Ansprüche, dadurch gekennzeichnet, daß die Zugfestigkeit des Werkstoffs mindestens 1100 MPa bei einer Gesamtdehnung von mindestens 11% beträgt.

12. Zierteil nach einem der vorhergehenden Ansprüche, dadurch gekennzeichnet, daß der Werkstoff einen Elastizitätsmodul von mindestens 70 GPa aufweist.

13. Verwendung eines Werkstoffs mit hoher Elastizität und hoher Zugfestigkeit, der nach Wegfall einer äußeren Verformungskraft selbsttätig die ursprüngliche Form annimmt, zur Herstellung eines Zierteils (2) für die Befestigung auf nachgiebig elastischen Oberflächen (1) im Innenraum von Fahrzeugen.

14. Verwendung nach Anspruch 13, dadurch gekennzeichnet, daß der Werkstoff eine Titan-Nickel-Legierung ist.

15. Verwendung nach Anspruch 13, dadurch gekennzeichnet daß der Werkstoff ein Kunststoff ist.

16. Verwendung nach Anspruch 15, dadurch gekennzeichnet, daß der Kunststoff eine metallisch glänzende Oberfläche aufweist.
